# EUROPEAN PATENT APPLICATION

(11) **EP 1 837 701 A1**
(43) Date of publication of application: **26.09.2007**
(21) Application number: 06020148.0
(22) Date of filing: 26.09.2006
(51) Int. Cl.: G02F 1/13357

(54) **Surface light source comprising a hollow light guide for a backlight unit and a liquid crystal display using the same**

(30) Priority: 24.03.2006 KR 20060026962
(71) Applicant: LG Electronics, Inc., Seoul 150-010 (KR)
(72) Inventor: Lee, Weon Woong, Jung-gu Incheon 400-102 (KR)
(74) Representative: Katérle, Axel

(57) **Abstract**

The present invention is directed to a surface light source device (110A,110B) utilizing a light pipe (140). The present invention is also directed to a backlight unit (100A,100B) and a liquid crystal display (300,400) which are provided with such surface light source device (110A,110B). The light pipe (140) includes an inner surface (140b) structured with a plurality of prisms, wherein the light from the light source (120a,130) is incident on the inner surface (140b); and a smooth outer surface (140a) having a light emitting surface disposed substantially parallel to the liquid crystal panel (200), wherein the incident light is emitted through the light emitting surface. A diffusive layer (142) may be disposed on the outer surface (140a) of the light pipe to receive at least the light emitted from the light emitting surface.

## Description

### CROSS-REFERENCE TO A RELATED APPLICACTION

The present application claims the benefit of priority under 35 U.S.C. 119 based on the Korean patent application number 10-2006-0026962 filed on March 24, 2006. This application is incorporated herein by reference.

### BACKGROUND OF THE INVENTION

### Field of the Invention

The present invention is directed to a surface light source device utilizing a light pipe. The present invention is also directed to a backlight unit and a liquid crystal display which are provided with such surface light source device.

### Description of the Related Art

The liquid crystal display, also know as LCD, is an electronic device that transforms electrical signals into visual signals by utilizing the change in the transmittance of the liquid crystals according to applied voltages.

As well known in the art, the liquid crystal display is a non-emitting display device. Therefore, the liquid crystal display needs to use an outside light source unit for illuminating the viewing plane of the liquid crystal panel from its outside in order to display visual information. A backlight unit is conventionally used for this use.

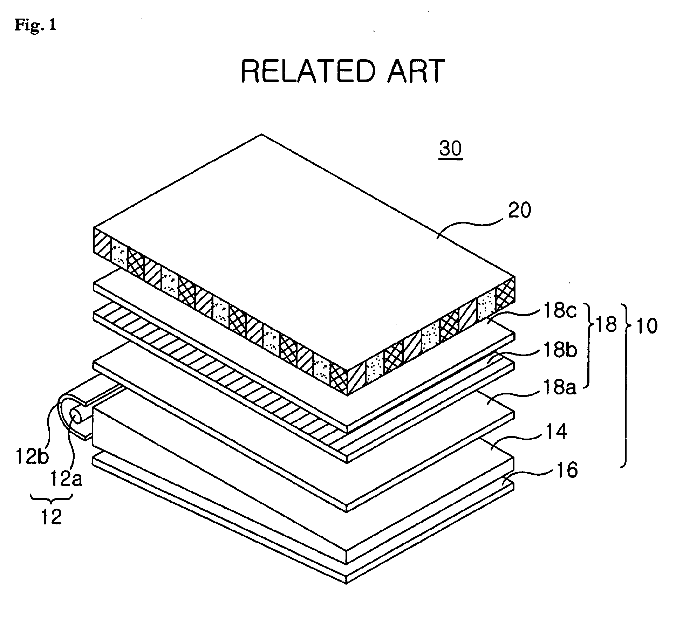

Fig. 1 is a perspective view illustrating a liquid crystal display.

Referring to Fig. 1, the liquid crystal display 30 comprises a liquid crystal panel 20 and a backlight unit 10 disposed at the back of the liquid crystal panel. The liquid crystal panel 20 receives the light provided by the backlight unit 10 to display images.

In general, the backlight unit 10 comprises a light source unit 12, a light guide plate 14, a reflective sheet 16 and optical sheets 18.

The light source unit 12 comprises a light source 12a and a light source reflector 12b. A cold cathode fluorescent lamp (CCFL) or an external electrode fluorescent lamp (EEFL) may be used for the light source 12a. The light source 12a is received inside the light source reflector 12b and disposed along one surface of the light guide plate 14. The light source reflector 12b is disposed outside the light source 12a to reflect the light generated at the light source 12a such that the light is input into the light guide plate 14.

The side surface of the light guide plate 14 disposed adjacent to the light source unit 12 becomes a light incidence surface for receiving the light. The light generated at the light source unit 12 is input into the light guide plate 14 through the light incidence surface, and emitted through the upper surface of the light guide plate 14. The upper surface of the light guide plate 14 becomes the light emitting surface for emitting the light.

The reflective sheet 16 reflects the light emitted through the lower surface of the light guide plate 14 such that the light is re-input into the inside of the light guide plate 14, which improves the light efficiency of the backlight unit 10.

The optical sheets 18 may comprise a diffuser sheet 18a, a prism sheet 18b and a protector sheet 18c. The optical sheets 18a, 18b and 18c control the light such that the light is effectively provided to the viewing plane of the liquid crystal panel 20.

However, the edge-light type backlight unit 10, which only uses the light that is input through the side surfaces of the light guide plate for illumination, has a problem that the light generated at the light source 12 is not fully used for illumination because the light loss occurs considerably at the light guide plate 14.

Furthermore, the direct type backlight unit, which has a plurality of light sources positioned directly under the liquid crystal panel, also has a problem that the light loss occurs at optical plates such as a diffusion plate. In addition, the light sources arranged adjacent to each other generates heat convection inside the backlight unit, and such heat convection deforms the optical sheets disposed over the light sources. The deformation of the optical sheets deteriorates the display quality.

To solve such problems, there have been recently various attempts to develop a surface light source device which emits light in the form of surface light. Information relevant to attempts to address the above problems can be found in U.S. patent Nos. 6,771,330 and 6,514,113 and U.S. patent application No. 2004-004757, which disclose the surface light source utilizing a flat fluorescent lamp (FEL), LEDs or carbon nano tubes (CNTs). However, the surface light source devices of the above publications still suffer from one or more of the following disadvantages: the complex manufacturing process, unsatisfactory optical property, and high power consumption.

For the foregoing reasons, there is a need for a surface light source device that can be easily manufactured, that has satisfactory optical properties and that consumes low electric power.

### SUMMARY OF THE INVENTION

An object of the present invention is to provide a surface light source device that can be easily manufactured.

Another object of the present invention is to provide a surface light source device that consumes low electric power and that is free of the heat-related problems.

Further another object of the present invention is to provide a surface light source device that is easily applicable to large size and thin display devices.

Still further another embodiment of the present invention is to provide a backlight unit and a liquid crystal display that are provided with such surface light source device.

To fulfill one or more of the above objects, according to one aspect of the present invention, the present invention provides a liquid crystal display comprising a liquid crystal panel displaying images according to electrical signals provided from the outside device; and a backlight unit for illuminating the liquid crystal panel from the back of the liquid crystal panel. The backlight unit comprises a surface light source device for providing surface light. The surface light source device includes at least one light source generating light; and at least one light pipe including an inner surface structured with a plurality of prisms, wherein the light from the light source is incident on the inner surface; and a smooth outer surface having a light emitting surface disposed substantially parallel to the liquid crystal panel, wherein the incident light is emitted through the light emitting surface; and at least one optical sheet disposed in one side of the surface light source device, wherein the optical sheet receives the light emitted from the surface light source device and provides the light to the liquid crystal panel.

According to another aspect of the present invention, the present invention provides a backlight unit for illuminating a liquid crystal panel from the back of the liquid crystal panel. The backlight unit comprises a surface light source device for providing surface light. The surface light source device includes at least one light source generating light; and at least one light pipe including an inner surface structured with a plurality of prisms, wherein the light from the light source is incident on the inner surface; and a smooth outer surface having a light emitting surface disposed substantially parallel to the liquid crystal panel, wherein the incident light is emitted through the light emitting surface.

According to further another aspect of the present invention, the present invention provides a surface light source device for providing surface light. The surface light source comprises at least one light source generating light; and at least one light pipe including an inner surface structured with a plurality of prisms, wherein the light from the light source is incident on the inner surface; and a smooth outer surface having a light emitting surface disposed substantially parallel to the liquid crystal panel, wherein the incident light is emitted through the light emitting surface.

According to the present invention, the surface light source device can be embodied with a light pipe combined with point light sources or linear light sources. Therefore, the present invention has an advantage that the surface light source can be easily manufactured.

Furthermore, the surface light source device according to the present invention uses less number of light sources. Therefore, the present invention has another advantage that the surface light source device consumes less electric power.

Furthermore, since the surface light source device according to the present invention has a structure where the light sources generating heat may be received inside the light pipe, the heat generated at the light sources is circulated only inside the light pipe and the heat is prevented from being easily transferred to the optical sheets. Therefore, the heat-related deformation of the optical sheets may be prevented.

Furthermore, the surface light source device according to the present invention is easily applicable to large size and thin display devices.

### BRIEF DESCRIPTION OF THE DRAWINGS

These and other features, aspects and advantages of the present invention will become better understood with regard to the following description, appended claims, and accompanying drawings where:

Fig. 1 is a perspective view illustrating a liquid crystal display;

Fig. 2a is an exploded perspective view illustrating a liquid crystal display according to one embodiment of the present invention;

Fig. 2b is a cross-sectional view illustrating the liquid crystal display of Fig. 2a;

Fig. 2c is a cross-sectional view illustrating the light pipe of Fig. 2b taken along the line A-A;

Fig. 2d is an enlarged partial cross-sectional view illustrating the area C of Fig. 2c;

Fig. 2e is a cross-sectional view illustrating a part of the liquid crystal display according to another embodiment of the present invention;

Fig. 2f is a cross-sectional view illustrating a part of the liquid crystal display according to further another embodiment of the present invention;

Fig. 2g is a partial cross-sectional view illustrating a part of the liquid crystal display according to still further another embodiment of the present invention;

Fig. 3a is a cross-sectional view of the liquid crystal display according to further another embodiment of the present invention;

Fig. 3b is a cross-sectional view of the surface light source of Fig. 3a taken along the line B-B;

Figs. 3c and 3d are enlarged partial cross-sectional views of the area D of Fig. 3b; and

Figs. 4a-4c are cross-sectional views illustrating other embodiments of the diffusive layer and the reflector of Fig. 3b.

### DETAILED DESCRIPTON OF THE INVENTION

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

In the following drawings, the same reference numbers will be used to refer to the same or like parts through all embodiments. In addition, the detailed descriptions of the identical parts are not repeated.

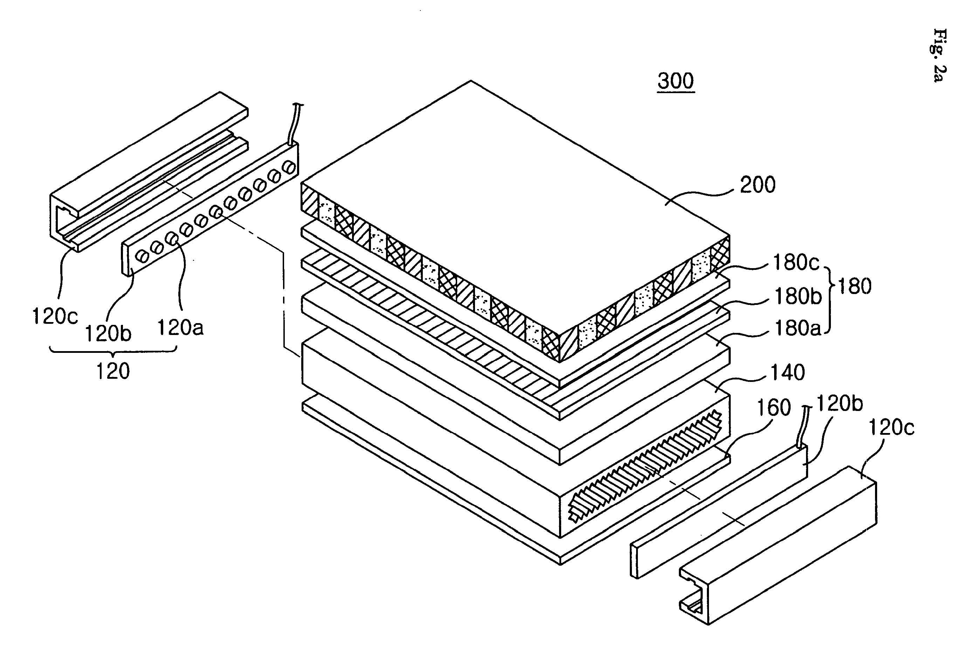

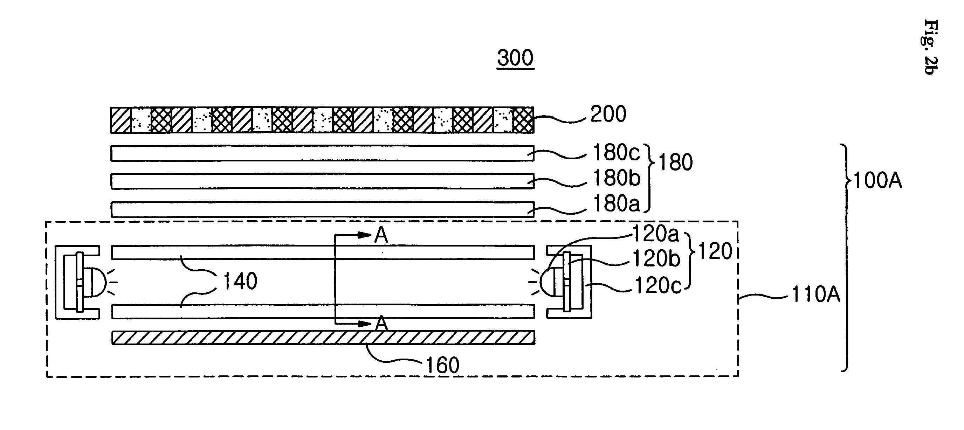

Fig. 2a is an exploded perspective view illustrating a liquid crystal display according to one embodiment of the present invention; and Fig. 2b is a cross-sectional view illustrating the liquid crystal display of Fig. 2a.

Referring to Figs. 2a and 2b, a liquid crystal panel 300 according to the present invention comprises a liquid crystal panel 200 and a backlight unit 100A.

The liquid crystal panel 300 displays images according to driving signals and data signals provided by an outside device. To understand and work the present invention, it is not important to describe the detailed structure of the liquid crystal panel 200. And, the idea of the present invention is widely applicable to any type of liquid crystal panel usually employed in the liquid crystal display. Therefore, the structure of the liquid crystal panel 200 will not need to be herein described.

The backlight unit 100A is positioned at the back of the liquid crystal panel 200 to provide light, for example white light to the liquid crystal panel 200. The backlight unit 100A comprises a surface light source device 110A for providing surface light suited to illuminating the viewing plane of the liquid crystal panel 200. Selectively, the backlight unit 100A may comprises optical sheets 180 that are disposed between the liquid crystal panel 200 and the surface light source device 110A to transform the light provided by the surface light source device 110A to more suitable light for illuminating the liquid crystal panel 200.

The surface light source device 110A according to one embodiment of the present invention comprises light source units 120, a light pipe 140 and a reflective sheet 160.

Each light source unit 120 comprises light sources 120a generating the light. The light sources 120a according to one embodiment of the present invention are point light sources such as light emitting diodes (LEDs). In this case, the light sources 120a are mounted on a printed circuit board (PCB) 120b in a certain arrangement, and the outside electric power source is electrically connected to the light sources 120a through the wiring patterns of the PCB 120b.

According to one embodiment of the present invention, the light sources 120a are disposed along two side surfaces. Therefore, the light generated at the light sources 120a is input into the light pipe 140 through its side surfaces. Each light source unit 120 comprises a housing 120c for receiving and supporting the PCB 120b mounted with the light sources 120a. The housing 120c may be made of metal and plastic materials, and each housing 120c has an inside groove for the PCB 120b to be inserted therein. Preferably, the inner wall of the housing 120c has a reflective coating to reflect the light emitted from the light sources 120a.

The two side surfaces of the light pipe 140 become light incidence surfaces through which the light generated at the light source unit 120 is input into the light pipe 140, and the upper surface of the light pipe 140 becomes the light emitting surface through which the light is output from the light pipe 140. The light emitting surface is preferably at least as wide as or wider than the viewing plane of the liquid crystal panel 200 so that the light is uniformly provided to the viewing plane.

Although the light source unit 120 is disposed at the side area of the light pipe 140, the backlight unit 100A has almost equal light efficiency to the conventional direct-lighting type backlight unit because the light pipe 140 has excellent light transportation capability and little light loss therein. Additionally, for the same level of brightness, fewer LEDs can be used in the backlight unit 100A of the present invention than in the conventional direct-lighting type backlight unit.

According to another embodiment of the present invention, the light source unit 120 may be disposed only at one side area of the light pipe 140. In such case, the light efficiency may be secured by installing reflecting means at the opposite side area of the light pipe 140 to reflect and reuses the light transported to the end of the light pipe 140. Preferably, the light pipe 140 is designed to obtain uniform emitting light in such a manner that the cross-sectional area of the light pipe 140 becomes smaller along the longitudinal direction.

The structure of the light pipe 140 will be hereinafter described in detail with reference to the drawings.

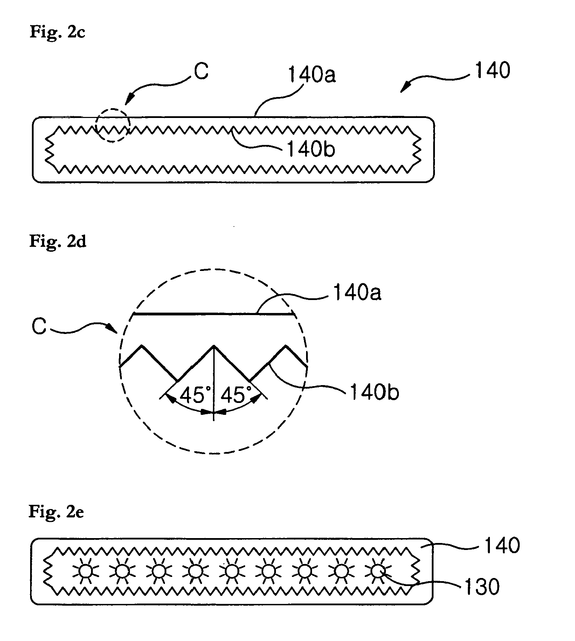

Fig. 2c is a cross-sectional view illustrating the light pipe of Fig. 2b taken along the line A-A; and Fig. 2d is an enlarged partial cross-sectional view illustrating the area C of Fig. 2c.

Referring to Figs. 2c and 2d, the inside of the light pipe 140 is hollow and filled with air, and the cross-section of the light pipe 140 is oval or rectangular. The light pipe 140 is a kind of hollow light waveguide. The light pipe 140 has a suitable structure for transporting the light input through its one or two side surfaces in a longitudinal direction.

According to one embodiment of the present invention, the inner surface 140b of the light pipe 140 is structured with micro prisms arranged in fine pitches, wherein each micro prism is extended in a longitudinal direction. The micro prisms can be formed as a regular triangle, a scalene triangle and an isosceles triangle, etc. As shown in Fig. 2d, the cross-section of each prism is preferably an isosceles triangle with 90° vertex angle.

The outer surface of the light pipe 140 is not structured but smooth, and a part of the outer surface becomes the light emitting surface for emitting the light to the liquid crystal panel (not shown).

Alternatively, the outer surface 140a of the light pipe 140 may be structured, and the inner surface 140b of the light pipe 140 may be smooth.

Alternatively, both the outer and inner surfaces 140a ad 140b of the light pipe 140 may be structured.

The distance between the outer surface 140a and the inner surface 140b varies widely according to the application circumstance. However, considering the light loss, it is preferable that the distance has a value of between 50 ~ 300µm.

The light pipe 140 is made of a thermoplastic resin that has good light transmittance, mechanical strength (especially impact resistance), thermal resistance and electrical stability. Preferably, the light pipe 140 is made of polyethylen terephthalate (PET), polycarbonate (PC) or polymethyl methacrylate (PMMA). More preferably, the light pipe 140 is made of polymethyl methacrylate (PMMA).

The light pipe 140 may be molded by already known plastic molding process such as injection molding or extrusion molding. It is within the capability of a person skilled in the art to make the light pipe 140 by such already known molding processes with the above mentioned materials without detailed description.

According to another embodiment of the present invention, the light pipe 140 can be made by another method where UV curing resin is coated on the polymer base film. More particularly, UV curing resin is first coated on a mold, and a base film is pressed by the mold with UV curing resin to transfer micro prism patterns on a surface of the base film. Ultraviolet ray is then irradiated over the micro prism patterns for curing, thereby to obtain an optical film having a structured surface. Finally, under applied heat, the optical film is rolled so that the light pipe 140 is obtained.

Referring back to Figs. 2a and 2b, the surface light source device 110A according to one embodiment of the present invention comprises a reflective sheet 160. The reflective sheet 160 reflects the light output through the lower surface of the light pipe 140 to re-input the light into the light pipe 140, thereby the light efficiency may be improved.

The reflector sheet 180 may be manufactured by applying Ag on a sheet made of SUS, Brass, Al, PET, etc and coating it with Ti to prevent the thermal deterioration caused by heat absorption.

Alternatively, the reflective sheet 160 may be obtained by dispersing micro-pores capable of scattering the light in a resin sheet such as PET.

The backlight unit 100A may comprise a set of optical sheets 180 disposed between the surface light source device 110A and the liquid crystal panel 200. The set of optical sheets 180 may comprise a diffuser sheet 180a, a prism sheet 180b and a protector sheet 180c.

The light emitted through the light emitting surface is input into the diffuser sheet 180a. The diffuser sheet 180a scatters the light to make the brightness uniform and widen the viewing angle.

Because the brightness declines sharply while the light passes through the diffuser sheet 180a, the prism sheet 180b is provided in the backlight unit 100A to compensate such declination of brightness. The prism sheet 180b refracts the light emitted from the diffuser sheet 180a in a low angle to collimate the light toward the front direction; thereby the brightness is improved within the effective viewing angle.

The protector sheet 180c is disposed over the prism sheet 180b. The protector sheet 180c prevents the surface of the prism sheet 180b from being damaged, and also rewidens the viewing angle once narrowed by the prism sheet 180b.

The specified structure and materialistic property of the optical sheets 180 are not important to understand and work the present invention, and any conventional structure and material normally used in the art are widely applicable to the optical sheet 180 of the present invention.

Hereinafter, the operation of the surface light source device 110A, the backlight unit 100A and the liquid crystal display 300 according to one embodiment of the present invention will be described.

Referring back to Fig. 2b, the light sources 120a generate light with applied electrical power. The light is input into the light pipe 140 through its side surfaces.

A portion of the light input into the light pipe 140 is transported in a longitudinal direction in the light pipe 140 by the well-know phenomenon, i.e. total reflection. As already described above, the medium which fills the inside of the light pipe 140 is air, and thus the light may be transported inside the light pipe 140 with little or no loss.

On the other hand, the light input into the light pipe 140 is emitted through the outer surface of the light pipe 140 while transported inside the light pipe 140. Here, the light emitted through the lower surface of the light pipe 140 is reflected on the reflective sheet 160 and re-input into the light pipe 140, whereas the light emitted through the upper surface of the light pipe 140, i.e. the light emitting surface is provided to the liquid crystal panel 200 through the optical sheets 180.

The light emitted through the light emitting surface is first input into the diffuser sheet 180a. The diffuser sheet 180a scatters the light to make the brightness uniform and widen the viewing angle. The light is input to the prism sheet 180b through the diffuser sheet 180a, and the prism sheet 180b refracts the light emitted from the diffuser sheet 180a in a low angle to collimate the light toward the front direction. The light is input into the protector sheet 180c through the prism sheet 180b, and the viewing angle once narrowed while passing through the prism sheet 180b is re-widened by the protector sheet 180c to be input into the liquid crystal panel 200. The liquid crystal panel 200 modulates the arrangement of the liquid crystal molecules and controls its light transmittance to display images.

Hereinafter, other embodiments of the present invention will be described.

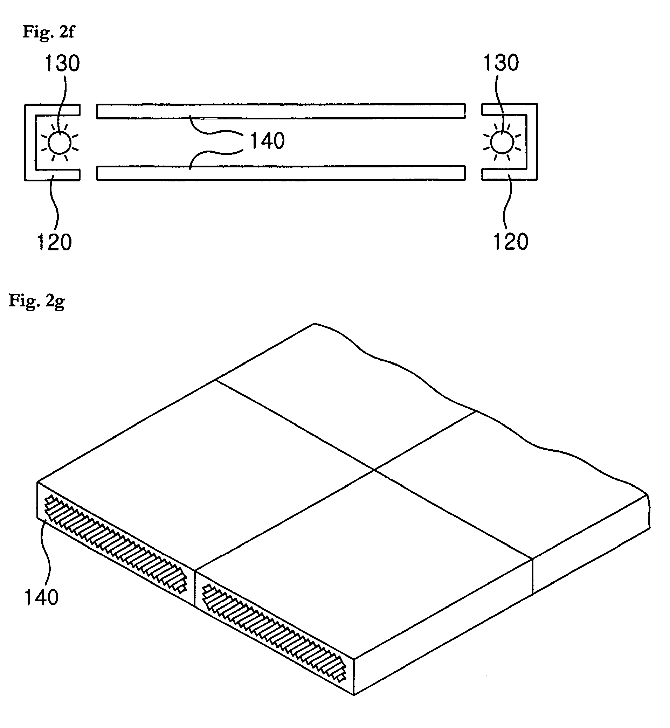

Fig. 2e is a cross-sectional view illustrating a part of the liquid crystal display according to another embodiment of the present invention. Fig. 2f is a cross-sectional view illustrating a part of the liquid crystal display according to further another embodiment of the present invention. And, Fig. 2g is a partial cross-sectional view illustrating a part of the liquid crystal display according to still further another embodiment of the present invention. For the convenience, the same parts as those of the foregoing embodiment are not illustrated.

In the foregoing embodiment, LEDs in the form of point light sources are employed for the lights sources 120a. However, the linear light sources such as CCFLs or EEFLs may be employed for the light sources 120a. In such case, as shown in Fig. 2e, the linear light sources 130 are disposed adjacent to each other inside the light pipe 140.

Also, as shown in Fig. 2f, the light sources 130 can be disposed along two side surfaces of the light pipe 140. Therefore, the light generated at the light sources 130 is input into the light pipe 140 through its side surfaces.

Additionally, in the foregoing embodiment, the surface light source device 110A is embodied with one light pipe 140. However, as shown in Fig. 2g, the surface light source device 110A may be also embodied with a plurality of light pipes 140 disposed in such a manner that the adjacent light pipes 140 contact each other. Such simple disposition of the light pipes 140 allows the optical communication between the light pipes 140 because each light pipe 140 has the same dimension.

This allows the application of the surface light source of the present invention to the large size display. Namely, simply arranging the light pipes 140 vertically and horizontally according to the size of the liquid crystal panel and installing the light source units using the point light source (120 of Fig. 2b) at the side areas of the light pipe 140, inserting the linear light sources (130 of Fig. 2e) or using the linear light sources (130 of Fig. 2f) at the side area of the light pipe 140 can embody large size surface light source device.

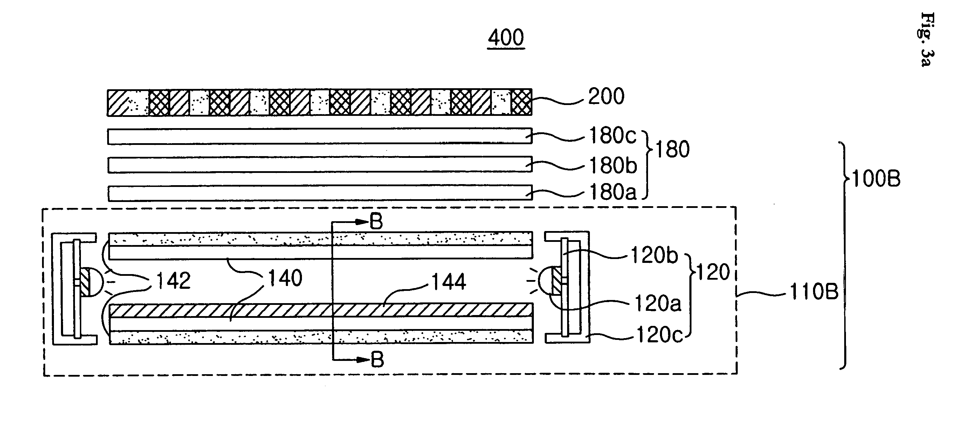

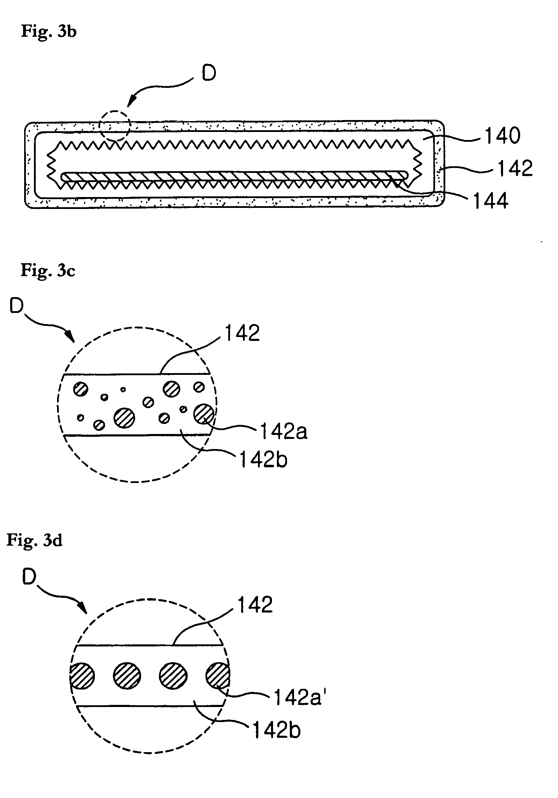

Fig. 3a is a cross-sectional view of the liquid crystal display according to further another embodiment of the present invention; Fig. 3b is a cross-sectional view of the surface light source of Fig. 3a taken along the line B-B; and Figs. 3c and 3d are enlarged partial cross-sectional views of the area D of Fig. 3b.

Referring to Figs. 3a and 3b, the liquid crystal display 400 comprises the liquid crystal panel 200 and a backlight unit 100B.

The backlight unit 100B comprises a surface light source device 110B for providing surface light. The backlight unit 100B may optionally comprise the optical sheets 180 to transform the light provided by the surface light source device 110B to more suitable light for the illumination of the panel 200.

The surface light source device 110B comprises the light source units 120, the light pipe 140, a diffusive layer 142 disposed outside the light pipe and a reflector 144 disposed inside the light pipe 140.

The diffusive layer 142 enables the light confined inside the light pipe 140 to be emitted outside the light pipe 140 and scatters the light for brightness uniformity.

Referring to Figs. 3c and 3d, the diffusive layer 142 comprises a base material 142b consisting of a resin and a plurality of diffusion particles 142a and 142a' distributed in the base material 142b.

The base material 142b is preferably an acrylic resin that has good light transmittance, thermal resistance and mechanical strength. More preferably, the bases material 142b is polyacrylate or polymethyl methacrylate.

Beads consisting of the same or other resins as the base material 142b may be used for the diffusion particles 142a and 142a'. The diffusion particles 142a and 142a' are preferably contained by 25-35wt% against the base material 142b. More preferably, the diffusion particles 142a and 142a' are contained by 30wt% against the base material 142b.

According to one embodiment of the present invention, the size and the distribution of the diffusion particles 142a are random. Such random structure increases the haze effect to prevent the defects such as scratches that physical contacts would make on the base material 142b or the diffuser sheet (130a of Fig. 3) from being projected onto the liquid crystal panel (200 of Fig. 3a).

According to another embodiment of the present invention, the size and the distribution of the diffusion particle 142a' are substantially uniform. Such uniform structure allows the brightness to increase although the haze effect rather decreases. In general, as the uniformity of the diffusion particles 142a' increases, the haze effect decreases but the brightness increases.

The diffusive layer 142 can be formed by various methods already known in the art. For example, the diffusive layer 142 can be obtained by a method where diffusion particles such as beads are mixed with a liquid phase resin and the mixture is applied to a base film, followed by the mixture being cured; and the film is thermo-compressed onto the outside surface of the light pipe 140. Alternatively, the diffusive layer 142 can be obtained by another method where a liquid phase resin with bead distributed therein is applied to the outside surface of the light pipe 140.

Referring back to Figs. 3a and 3b, the reflector 144 is disposed inside the light pipe 140. The reflector 144 prevents the light from being emitted through the lower surface of the light pipe 140 and thus improves the light efficiency. Furthermore, the reflector 144 enables the light confined in the light pipe 140 to be emitted outside the light pipe 140.

The reflector 144 may consist of high reflective materials. For example, the reflector 144 comprises a reflective coating consisting of metals such as Al or Ag.

The optical sheets 180 are disposed between the liquid crystal panel 200 and the surface light source device 110B, and the optical sheets 180 may comprise the diffuser sheet 180a, the prism sheet 180b and the protector sheet 180c.

Hereinafter, the operation of the surface light source device 110B, the backlight unit 100B and the liquid crystal display 400 will be described with reference to the drawings.

Referring back to Fig. 3a, the light sources 120a generate light with applied electrical power. The light is input into the light pipe 140 through its side surfaces. A portion of the light input into the light pipe 140 is transported in a longitudinal direction in the light pipe 140 by the well-know phenomenon, i.e. total reflection. As already described above, the medium which fills the inside of the light pipe 140 is air, and thus the light may be transported inside the light pipe 140 with little or no loss. The light is reflected on the upper surface of the reflector 144 while transported inside the light pipe 140, and the reflected light is input into the diffusive layer 142. Here, the inputted light is scattered and unified by the diffusion particles (142a and 142a' of Figs. 3a and 3b) distributed in the diffusive layer 142. The light passing though the diffusive layer 142 is inputted into the liquid crystal panel 200 through the diffuser sheet 180a, the prism sheet 180b and the protector sheet 180c.

In the foregoing embodiment, the diffusive layer 142 fully covers the outer surface of the light pipe 140, and the reflector 144 is inserted in the light pipe 140. However, the structure and disposition of the diffusive layer 142 and the reflector 144 can be modified variously by a person skilled in the art. Hereinafter, some modifications of the diffusive layer 142 and the reflector 144 will be described with reference to the drawings.

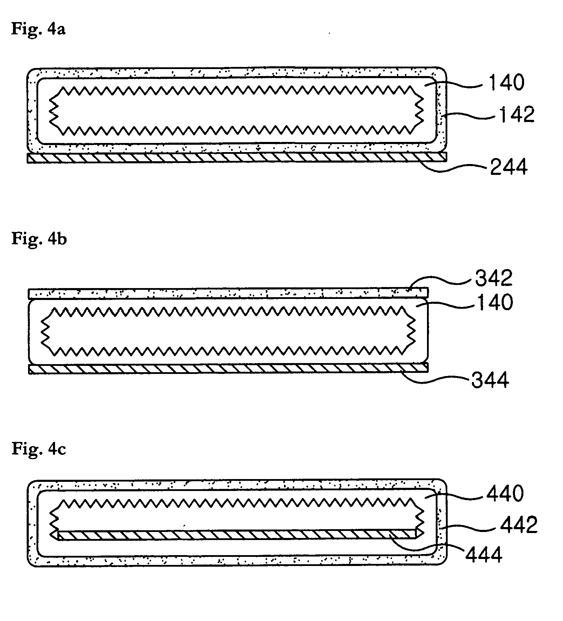

Figs. 4a-4c are cross-sectional views illustrating other embodiments of the diffusive layer and the reflector of Fig. 3b. Only, the structural differences from the diffusive layer 142 and the reflector 144 are mainly described for convenience.

Referring to Fig. 4a, according to another embodiment, the diffusive layer 142 is disposed to fully cover the outside surface of the light pipe 140, and the reflector 244 is disposed on the lower surface of the diffusive layer 142 as shown in the drawing.

Referring to Fig. 4b, according to further another embodiment, the diffusive layer 342 and the reflector 344 both are disposed only on a certain area of the outer surface of the light pipe 140. Here, the diffusive layer 342 is formed at the position facing the liquid crystal panel (not shown), and the reflector 344 is disposed on the lower surface of the light pipe 140 and faces the diffusive layer 342 with the light pipe 140 therebetween.

Referring to Fig. 4c, according to still further another embodiment, the diffusive layer 442 is formed to fully cover the outer surface of the light pipe 440, and the reflector 444 is disposed in the light pipe 440. Only, in this case, the inside area of the light pipe 440 where the reflector 444 is disposed is free of the micro prism structure.

## Claims

1. A liquid crystal display comprising:
a liquid crystal panel displaying images according to electrical signals provided from the outside device; and
a backlight unit for illuminating the liquid crystal panel from the back of the liquid crystal panel, the backlight unit comprising:
a surface light source device for providing surface light, the surface light source device including:
at least one light source generating light; and
at least one light pipe including:
an inner surface structured with a plurality of prisms, wherein the light from the light source is incident on the inner surface; and
a smooth outer surface having a light emitting surface disposed substantially parallel to the liquid crystal panel, wherein the incident light is emitted through the light emitting surface; and
at least one optical sheet disposed in one side of the surface light source device, wherein the optical sheet receives the light emitted from the surface light source device and provides the light to the liquid crystal panel.

2. The liquid crystal display of claim 1, wherein the at least one light source is LEDs, and wherein the surface light source further comprises:
a printed circuit board electrically connecting an electric power source to the LEDs, wherein the LEDs are mounted on the printed circuit board; and
a housing receiving and supporting the printed circuit board.

3. The liquid crystal display of claim 1, further comprising a reflective sheet disposed under the light pipe to reflect the light emitted through a bottom surface of the light pipe and re-input the light into the inside of the light pipe.

4. The liquid crystal display of claim 1, wherein the at least light source is CCFLs or EEFLs disposed inside or along two side surfaces of the light pipe.

5. The liquid crystal display of claim 1, further comprising a diffusive layer disposed on the outer surface of the light pipe to receive at least the light emitted from the light emitting surface, the diffusive layer including:
a base material consisting of a light-transmissive resin; and
a plurality of diffusion particles distributed in the base material.

6. The liquid crystal display of claim 5, further comprising a reflector having a surface capable of reflecting light, wherein the reflector is disposed in or outside the light pipe.

7. A backlight unit for illuminating a liquid crystal panel from the back of the liquid crystal panel, the backlight unit comprising a surface light source device for providing surface light, the surface light source device including:
at least one light source generating light; and
at least one light pipe including:
an inner surface structured with a plurality of prisms, wherein the light from the light source is incident on the inner surface; and
a smooth outer surface having a light emitting surface disposed substantially parallel to the liquid crystal panel, wherein the incident light is emitted through the light emitting surface.

8. The backlight unit of claim 7, further comprising at least one optical sheet disposed in one side of the surface light source device, wherein the optical sheet receives the light emitted from the surface light source device and provides the light to the liquid crystal panel.

9. The backlight unit of claim 7, wherein the at least one light source is LEDs, and wherein the surface light source further comprises:
a printed circuit board electrically connecting a electric power source to the LEDs, wherein the LEDs are mounted on the printed circuit board; and
a housing receiving and supporting the printed circuit board.

10. The backlight unit of claim 7, further comprising a reflective sheet disposed under the light pipe to reflect the light emitted through a bottom surface of the light pipe and re-input the light into the inside of the light pipe.

11. The backlight unit of claim 7, wherein the light source is CCFLs or EEFLs disposed inside or along two side surfaces of the light pipe.

12. The backlight unit of claim 7, further comprising a diffusive layer disposed on the outer surface of the light pipe to receive at least the light emitted from the light emitting surface, the diffusive layer including:
a base material consisting of a light-transmissive resin; and
a plurality of diffusion particles distributed in the base material.

13. The backlight unit of claim 12, wherein the diffusion particles are beads.

14. The backlight unit of claim 12, further comprising a reflector having a surface capable of reflecting light, wherein the reflector sheet is disposed in or outside the light pipe.

15. A surface light source device for providing surface light, comprising:
at least one light source generating light; and
at least one light pipe including:
an inner surface structured with a plurality of prisms, wherein the light from the light source is incident on the inner surface; and
a smooth outer surface having a light emitting surface disposed substantially parallel to the liquid crystal panel, wherein the incident light is emitted through the light emitting surface.

16. The surface light source device of claim 15, wherein the at least one light source is LEDs, and wherein the surface light source further comprises:
a printed circuit board electrically connecting a electric power source to the LEDs, wherein the LEDs are mounted on the printed circuit board; and
a housing receiving and supporting the printed circuit board.

17. The surface light source device of claim 15, wherein the at least one light source is CCFLs or EEFLs disposed inside or along two side surfaces of the light pipe.

18. The surface light source device of claim 15, further comprising a diffusive layer disposed on the outer surface of the light pipe to receive at least the light emitted from the light emitting surface, the diffusive layer including:
a base material consisting of a light-transmissive resin; and
a plurality of diffusion particles distributed in the base material.

19. The surface light source device of claim 18, further comprising a reflector having a surface capable of reflecting light, wherein the reflector is disposed in or outside the light pipe.
